# EUROPEAN PATENT SPECIFICATION

(11) **EP 3 573 480 B1**
(45) Date of publication and mention of the grant of the patent: **13.05.2020**
(21) Application number: 18701264.6
(22) Date of filing: 09.01.2018
(51) Int. Cl.: A23L 29/238, A23L 27/40, A23L 23/10

(54) **SAVOURY CONCENTRATE COMPRISING INORGANIC SALT, FAT AND PSYLLIUM SEED HUSK GUM**
WOHLSCHMECKENDES KONZENTRAT MIT ANORGANISCHEM SALZ, FETT UND FLOHSAMENSCHALENGUMMI
CONCENTRÉ SAVOUREUX COMPRENANT UN SEL INORGANIQUE, DE LA MATIÈRE GRASSE ET DE LA GOMME D'ENVELOPPE DE PSYLLIUM

(30) Priority: 25.01.2017 EP 17153079
(43) Date of publication of application: 04.12.2019
(73) Proprietor: Unilever N.V., 3013 AL Rotterdam (NL); Unilever PLC, London, Greater London EC4Y 0DY (GB)
(72) Inventor: KIM, Hyun-Jung, 3133 AT Vlaardingen (NL); MELLEMA, Michel, 3133 AT Vlaardingen (NL); DE OLIVEIRA, Marcelo,Camilo, D-74074 Heilbronn (DE); WOLF, Kerstin, Michaela, 71154 Nufringen (DE)
(74) Representative: Tjon, Hon Kong Guno
(86) International application number: PCT/EP2018/050436
(87) International publication number: WO 2018/137921

(56) References cited:
- WO-A1-2004/030465
- WO-A1-2007/085609
- WO-A1-2007/104326
- WO-A1-2014/005853
- WO-A2-2014/095196
- JP-A- 2011 024 529
- JP-A- 2014 233 273
- JP-A- 2016 096 813
- US-A- 5 034 378
- Anonymous: "GNPD - Pumpkin Vegetable Soup", , 31 May 2007 (2007-05-31), XP055355349, Retrieved from the Internet: URL:http://www.gnpd.com/sinatra/recordpage /708728/from_search/2D2KRISdVm/?page=1 [retrieved on 2017-03-15]
- XIANG ZHOUYANG ET AL: "Emulsifying properties of an arabinoxylan-protein gum from distillers' grains and the co-production of animal", CELLULOSE, SPRINGER NETHERLANDS, NETHERLANDS, vol. 21, no. 5, 1 August 2014 (2014-08-01) , pages 3623-3635, XP035383506, ISSN: 0969-0239, DOI: 10.1007/S10570-014-0379-Z [retrieved on 2014-08-01]
- YADAV ET AL: "Corn fiber gum: A potential gum arabic replacer for beverage flavor emulsification", FOOD HYDROCOLLOIDS, ELSEVIER BV, NL, vol. 21, no. 7, 6 April 2007 (2007-04-06), pages 1022-1030, XP022023382, ISSN: 0268-005X, DOI: 10.1016/J.FOODHYD.2006.07.009

## Description

### TECHNICAL FIELD OF THE INVENTION

The present invention relates to a savoury concentrate, more particularly a savoury concentrate that can be used in the preparation of broths, bouillons, soups, sauces, gravies etc. to improve taste as well as appearance and texture. The savoury concentrate can be provided in the form of, for instance, cubes, pellets or granulates.

The savoury concentrate of the present invention comprises the following components:
a) 22-85 wt.% inorganic salt;
b) 2-60 wt.% fat;
c) 1-9 wt.% of psyllium seed husk gum; and
d) optional further components.

The present invention also provides a process of preparing a savoury concentrate, said process comprising:
- providing a savoury concentrate mixture containing inorganic salt, fat, psyllium seed husk gum and optionally further components; and
- converting the savoury concentrate mixture into shaped articles or granules.

### BACKGROUND OF THE INVENTION

The use of bouillon cubes to provide taste in soups, gravies, sauces and other similar food products is well known. Bouillon cubes typically contain salt, sugar, fat, binders, herbs, spices, taste enhancer (e.g. glutamate) and flavouring.

Psyllium is the common name used for several members of the plant genus *Plantago* whose seeds are used commercially for the production of mucilage. Mucilage describes a group of clear, colourless, gelling agents derived from plants. The mucilage obtained from psyllium comes from the seed husk. Mucilage is obtained by mechanical milling/grinding of the outer layer of the seed. Mucilage yield amounts to about 25% (by weight) of the total seed yield. Plantago-seed mucilage is often referred to as husk, or psyllium husk. The milled seed mucilage is a white fibrous material that is hydrophilic, meaning that its molecular structure causes it to attract and bind to water. Upon absorbing water, the clear, colourless, mucilaginous gel that forms increases in volume by tenfold or more.

Psyllium is mainly used as a dietary fiber to relieve symptoms of both constipation and mild diarrhea and occasionally as a food thickener. The psyllium husk contains about 85 wt.% carbohydrates, mostly arabinoxylans.

WO 2007/085609 describes a bouillon and/or seasoning tablet and/or cube, which comprises, in total % in weight, 0.5-10 % oil, and/or 0-5 % fat, binders, salt, between 1 and 5 % of total water, as well as between 0.5 and 8 % of cereal, vegetable and/or fruit fibers, as well as optionally sugar, spices, flavors, taste enhancers, dehydrated vegetables, herb leaves and/or plant extracts. The binders are taken from the group consisting of dextrose syrup, maltodextrin, citric acid, meat extract and processed flavors.

WO 2014/095196 describes a solid or semi-solid composition comprising an edible fat and an inorganic salt, wherein the composition comprises pores, and wherein the pores contain a hydrocolloid; the pores constitute from 1 to 70% of the volume of the composition. The hydrocolloid preferably comprises xanthan gum and konjac gum in a weight ratio ranging from 1.5:1 to 2.5:1. The patent examples describe the blending of a solid composition containing palm oil stearin, vegetable fat, potato starch, water and kitchen salt with a hydrogel slurry containing water, NaCl, calcium chloride dehydrate, xanthan gum and konjac gum, followed by moulding in cylinder tubes and drying.

JP-A 2009-153486 describes solid instant seasoning compositions comprising one or more polysaccharides selected from gum Arabic, pullulan, alginate, pectin, arabinogalactan, cyclodextrin and maltodextrin, a thickness component (wheat flour) and fats and oils.

JP-A 2000-014335 discloses a powdery thickening stabilizer composition comprising a heated mixture of:
(A) a solid fat;
(B) a liquid or pasty oil;
(C) a thickening stabilizer selected from xanthan gum, guar gum, gum Arabic, pectin, arabinogalactan, alginic acid, propylene glycol alginate, carboxymethyl cellulose, sodium alginate, psyllium seed gum; and
(D) a powdery food material or a food additive soluble in cold water and having a low viscosity.

CA 2 292 056 C relates to the use of a polysaccharide for reducing viscosity resulting from psyllium, wherein the polysaccharide has a molecular weight of 20,000 or greater and an aqueous solution of said polysaccharide at 2% by weight has a viscosity of 0.9 cP or less. Example 14 describes the preparation of a powdered instant soup mix by mixing 16 g of granulate A, 12 g of granulate B (acid-treated hydroxypropyl etherified tapioca starch which was previously gelatinized) and 2 g of psyllium, wherein granulate A has the following composition:
- 385 g of powdered sweet corn,
- 365 g of milk powder,
- 125 g of granulated sugar,
- 62 g of common salt,
- 31 g of vegetable extract,
- 16 g of seasonings such as amino acids,
- 13 g of protein hydrolysates, and
- 3 g of a flavour.

### SUMMARY OF THE INVENTION

The inventors have developed a savoury concentrate, such as a bouillon cube, that can suitably be used in the preparation of bouillon, broth, soup, sauce or gravy, and that not only imparts taste and taste enhancement, but that additionally improves appearance and texture of the final product.

The savoury concentrate of the present invention comprising the following components:
a) 22-85 wt.% inorganic salt;
b) 2-60 wt.% fat;
c) 1-9 wt.% of psyllium seed husk gum;
d) 0-25 wt.% of glutamate component selected from glutamic acid, edible glutamate salts and combinations thereof;
e) 0-25 w.% starch component selected from native starch, pregelatinised starch, maltodextrin, modified starch and combinations thereof;
f) 0-20 wt.% of sugar selected from monosaccharides, disaccharides and combinations thereof;
g) 0-45 wt.% of vegetable matter selected from vegetables, herbs, spices and combinations thereof;
h) 0-10 wt.% water;
wherein the components a) to e) together constitute at least 55 wt.% of the savoury concentrate and wherein the components a) to h) together constitute at least 75 wt.% of the savoury concentrate.

When used in the preparation of aqueous dishes, the savoury concentrate of the present invention offers the additional advantage that it imparts an opacity and velvety mouthfeel (mouth coating) that is highly appreciated and associated with homemade preparations. Furthermore, the 'fat eyes' in these dishes tend to be smaller when the present concentrate is used. Consumers generally do not like 'fat eyes, and especially large 'fat eyes', as these are associated with a high fat content. The aforementioned benefits are clearly perceptible even if the savoury concentrate is applied in relatively small quantities in bouillon, broth, soup, sauce or gravy.

The presence of psyllium seed husk gum in the savoury concentrate of the present invention enables the preparation of a savoury concentrate in the form of a cohesive article (e.g. a bouillon cube) or a robust granulate.

The invention also provides a process of preparing a savoury concentrate, said process comprising:
- providing a savoury concentrate mixture containing:
   ∘ 22-85 wt.% inorganic salt;
   ∘ 2-60 wt.% fat;
   ∘ 1-9 wt.% of psyllium seed husk component containing at least 50 wt.% of psyllium seed husk gum;
   ∘ optional further components; and
- converting the savoury concentrate mixture into shaped articles or granules.

The use of psyllium seed husk gum in the specified concentration offers the advantage that the savoury concentrate mixture does not form a sticky mass even if said mixture has a relatively high moisture content. Thus, the savoury mixture can easily be processed and converted into shaped articles or granules.

### DETAILED DESCRIPTION OF THE INVENTION

A first aspect of the invention relates to a savoury concentrate comprising the following components:
a) 22-85 wt.% inorganic salt;
b) 2-60 wt.% fat;
c) 1-9 wt.% of psyllium seed husk gum;
d) 0-25 wt.% of glutamate component selected from glutamic acid, edible glutamate salts and combinations thereof;
e) 0-25 w.% starch component selected from native starch, pregelatinised starch, maltodextrin, modified starch and combinations thereof;
f) 0-20 wt.% of sugar selected from monosaccharides, disaccharides and combinations thereof;
g) 0-45 wt.% of vegetable matter selected from vegetables, herbs, spices and combinations thereof;
h) 0-10 wt.% water;
wherein the components a) to e) together constitute at least 55 wt.% preferably at least 65 wt.% and most preferably at least 75 wt.% of the savoury concentrate; and wherein the components a) to h) together constitute at least 75 wt.%, preferably at least 85 wt.%, more preferably at least 90 wt.% of the savoury concentrate.

The term "psyllium seed husk gum" as used herein refers to the naturally occurring arabinoxylan gum that is present in the seed husk of plants belonging to the genus *Plantago,* e.g. *Plantago ovata* and *Plantago psyllium.* Psyllium husk typically comprises more than 45% (w/w) of arabinoxylan. The arabinoxylan in psyllium husk is a branched polysacharide additionally comprising other sugars like mannose, rhamnose, glucose and galactose, as well as galacturonic acid. Arabinoxylans from psyllium husk are gel forming, and non-digestible.by human intestinal enzyme.

The term "arabinoxylan" as used herein refers to a hemicellulose that is a copolymer of two pentose sugars, i.e. arabinose and xylose.

The term "fat" as used herein refers to glycerides selected from triglycerides, diglycerides, monoglycerides, phosphoglycerides and combinations thereof. The term "fat" encompasses fats that are liquid at ambient temperature as well as fats that are solid or semi-solid at ambient temperature.

The solid fat content at 20°C (N₂₀) can suitably be determined using ISO 8292-1 (2012) - Determination of solid fat content by pulsed NMR.

The mass weighted mean diameter of a savoury concentrate in granulated form and of particulate components of the savoury concentrate may suitably be determined using a set of sieves with different mesh sizes in case at least 80 wt.% of the material has a diameter of more than 100 µm. In case the material is a very fine powder, i.e. a powder comprising more than 20 wt.% particles with a diameter of less than 100 µm, the mass weighted mean diameter may suitably be determined by means of microscopy. The mass weighted average diameter of starch granules, for instance, can be determined from microscopic images from separate areas, each showing at least 200 starch granules. Three images are used to measure starch granules sizes. The starch granules are labelled manually, and the sizes are automatically measured in micrometers by suitable image analysis software. Further details can be found in Snyder,EM. (1984) (Snyder,EM. (1984). Chapter XXII - Industrial microscopy of starches. In: Starch: Chemistry and Technology (Second Edition) Food Science and Technology, ed. R.L.W.PASCHALL San Diego: Academic Press, 661-673).

The savoury concentrate of the present invention typically comprises 30-70 wt.%, preferably 40-60 wt.% inorganic salt.

The fat content of the savoury concentrate typically is in the range of 3-35 wt.%, more preferably in the range of 5-30 wt.% fat. The fat contained in the savoury concentrate preferably has a solid fat content at 20°C (N₂₀) of at least 5%, more preferably of at least 10%.

The psyllium seed husk gum is preferably applied in the savoury concentrate in a concentration of 1.4-8 wt.%, more preferably in a concentration of 1.6-6 wt.%, even more preferably in a concentration of 1.8-5.5 and most preferably in a concentration of 2-5 wt.%.

The savoury concentrate advantageously contains at least 1 wt.% of the glutamate component. More preferably, the savoury concentrate contains 2-20 wt.% of the glutamate component.

The savoury concentrate of the present invention can take the form of, for instance, a granulate a shaped article or a paste. Preferably, the savoury concentrate is a granulate or a shaped article.

In accordance with a particularly preferred embodiment of the invention, the concentrate is a shaped article having a weight of 2-50 g, said shaped article comprising the following components:
a) 35-70 wt.%, preferably 40-60 wt.% inorganic salt;
b) 5-30 wt.%, preferably 15-25 wt.% fat, said fat having a solid fat content at 20°C (N₂₀) of at least 5%;
d) 0-20 wt.%, preferably 2-18 wt.% of the glutamate component.

The shaped article preferably has a weight in the range of 2.5-30 g, more preferably in the range of 3.0-28 g and most preferably of 3.2-24 g.
The shaped concentrate article can suitably be provided in different forms. Preferably, the article is provided in the form of a cuboid, more preferably in the form of a rectangular cuboid and most preferably in the form of a cube.

The fat contained in the shaped article preferably has a N₂₀ of at least 10%, more preferably of 25-95% and most preferably of 50-90%.

In one preferred embodiment, the savoury concentrate is a granulate having a mass weighted average diameter in the range of 0.1-5 mm, said granulate comprising the following components:
a) 35-85 wt.%, preferably 40-75 wt.% inorganic salt;
b) 3-20 wt.%, preferably 4-15 wt.% fat;
d) 2-20 wt.%, preferably 5-15 wt.% of the glutamate component.

The granulate preferably has a mass weighted average diameter in the range of 0.2-2.5 mm, most preferably in the range of 0.25-2 mm.

The fat contained in the granulate preferably has a N₂₀ of 0-60%, more preferably of 5-40% and most preferably of 10-30%.

The savoury concentrate typically contains less than 9 wt.% water. More preferably, the concentrate contains 1-8 wt.% water. Most preferably, the concentrate contains 2-7 wt.% water.

Unlike the savoury concentrate described in WO 2014/095196, the savoury concentrate of the present invention preferably does not comprise pores containing hydrocolloid attached to the wall of the pores.

The inorganic salt employed in the savoury concentrate is preferably selected from sodium chloride, potassium chloride and combinations thereof. Most preferably, the inorganic salt is sodium chloride.

The inorganic salt employed in the savoury concentrate typically has a mass weighted mean diameter in the range of 5-150 µm, more preferably of 10-100 µm.

The fat employed in the savoury concentrate preferably is a vegetable fat. The term "vegetable fat" encompasses vegetable fats that have been fractionated and/or hydrogenated. Examples of vegetable fats that may suitably be used in the savoury concentrate include palm oil, palm kernel oil, coconut oil, sunflower oil, soybean oil, rapeseed oil, linseed oil, cottonseed oil, maize oil, olive oil and combinations thereof.

Besides the inorganic salt, the fat and the psyllium seed husk gum, the savoury concentrate may suitably contain additional ingredients, such as starch components, taste enhancers (glutamate, yeast extract, yeast autolysate, hydrolysed vegetable protein), sugars, vegetable matter, gelatine, binders, emulsifiers (e.g. lecithin and/or monoglycerides), flavouring, colouring, minerals and vitamins.

The savoury concentrate preferably contains a starch component selected from native starch, pregelatinised starch, maltodextrin, modified starch and combinations thereof. The starch component is preferably present in the savoury concentrate in a concentration of 3-20 wt.%, more preferably of 4-18 wt.% and most preferably of 5-15 wt.%.

The starch component employed in accordance with the present invention is preferably selected from native starch, maltodextrin, pregelatinised starch and combinations thereof. Even more preferably, the starch is selected from native starch, pregelatinised starch and combinations thereof. Most preferably, the starch component is native starch.

The starch component employed in the savoury concentrate typically has a mass weighted mean diameter in the range of 5-200 µm, more preferably of 10-100 µm, most preferably of 12-60 µm.

The psyllium seed husk gum that is employed in accordance with the present invention may be provided in the form of seed husk and/or whole seed (including the husk). The psyllium seed husk gum is preferably applied in the savoury concentrate in the form of a powder. The particles of this powder typically contain more than 7.5 wt.%, more preferably at least 45 wt.% and most preferably at least 60 wt.% of the psyllium seed husk gum. The psyllium seed husk gum is preferably applied in the form of a powder having a mass weighted mean diameter in the range of 0.05-4 mm, more preferably of 0.1-3 mm and most preferably of 0.2-1.5 mm.

The savoury concentrate may suitably comprise 0-12 wt.%, more preferably 1-10 wt.% and most preferably 2-8 wt.% of sugar. Preferably, the sugar is selected from sucrose, glucose, fructose, lactose and combinations thereof.

In accordance with another preferred embodiment, the savoury concentrate contains 0-30 wt.% of vegetable matter selected from vegetables, herbs, spices and combinations thereof. More preferably, said vegetable matter is contained in the savoury concentrate in a concentration of 0-20%, most preferably 1-10% by weight of the savoury concentrate.

Examples of sources of vegetable matter include parsley, dill, basil, chives, sage, rosemary, thyme, oregano, leek, onion, mushrooms, broccoli, cauliflower, tomato, courgette, asparagus, bell pepper, egg plant, cucumber, carrot and coconut flesh. The vegetable matter may be applied in the form of leafs, slices, florets, dices or other pieces.

The savoury concentrate of the present invention preferably is a packaged savoury concentrate. The portion of the concentrate as packaged preferably has a weight (excluding packaging) of 1 g to 1 kg, preferably 2-250 g, more preferably 5-50 g. The packaging can be e.g. a container, a pouch or a wrapper.

A further aspect of the invention relates to a method of preparing a savoury product selected from a broth, a bouillon, a soup, a sauce or a gravy, said method comprising the addition of a savoury concentrate according to the invention. According to a particularly preferred embodiment said method comprises the addition of the savoury concentrate to a hot aqueous liquid having a temperature in excess of 60°C, more preferably in excess of 80°C.

Typically, the present method of preparing a savoury product comprises addition of the savoury concentrate in a concentration of at least 0.5% by weight of the savoury product. More preferably, the savoury concentrate is added in a concentration of 0.8-5%, most preferably of 1-3% by weight of the savoury product.

Yet another aspect of the invention relates to a process of preparing a savoury concentrate, said process comprising:
- providing a savoury concentrate mixture containing:
   ∘ 22-85 wt.% inorganic salt;
   ∘ 2-60 wt.% fat;
   ∘ 1-9 wt.% of psyllium seed husk component containing at least 50 wt.% of psyllium seed husk gum;
   ∘ optional further components; and
- converting the savoury concentrate mixture into shaped articles or granules.

The aforementioned process may suitably be employed to produce a savoury concentrate as described herein before.

The savoury concentrate mixture employed in the present process preferably has the same composition as the savoury concentrate described herein before.

According to a particularly preferred embodiment, the present process comprises incorporating into the savoury concentrate mixture the psyllium seed husk gum in the form of a powder having a mass weighted average diameter of 0.05-4 mm, more preferably of 0.1-3 mm and most preferably of 0.2-1.5 mm.

The preparation of the savoury concentrate mixture preferably comprises addition of a small quantity of water in the form of an aqueous liquid. Typically, the savoury concentrate mixture is prepared by adding 0.5-10%, more preferably 0.8-5% and most preferably 1-3% of aqueous liquid by weight of the savoury concentrate mixture. The aqueous liquid employed typically contains at least 50 wt.%, more preferably at least 70 wt.% water.

The savoury concentrate mixture may suitably be converted into shaped articles or granules by means of compression. The compressing of the savoury concentrate mixture can be done using equipment known in the art. Examples of known techniques that can be used to form the granules and/or shaped articles include tabletting, roller compacting, extrusion, pelletizing, etc.

The invention is further illustrated by the following non-limiting examples.

### EXAMPLES

### Example 1

A bouillon powder base was prepared on the basis of the recipes shown in Table 1.

**Table 1**

| **Ingredients** | **Parts by weight** |
|---|---|
| Sodium chloride | 40 |
| Fat ¹ | 20 |
| Potato starch, native, Moisture 9% | 11.38 |
| Glutamate, 32 Mesh | 15 |
| Sugar | 2 |
| Water | 2 |
| Vegetable matter ² | 2.4 |
| Flavouring ³ | 4.15 |
| Caramel | 0.07 |

| | |
|---|---|
| ¹ N₂₀ = 85% ² Contains turmeric ground, carrot granules, and celery seed ground, garlic, onion and white pepper ³ Contains chicken base, onion flavouring, Inosinate/guanylate, and chicken extract SD powder | |

Different bouillon cubes were prepared by admixing psyllium husk powders to the aforementioned bouillon powder base in the weight ratios indicated in Table 2

**Table 2**

| | **Parts by weight** | | | | |
|---|---|---|---|---|---|
| | **1a** | **1b** | **1c** | **1d** | **Control** |
| Bouillon base powder | 97 | 95.5 | 97 | 95.5 | 100 |
| Psyllium husk powder ¹ | 3.0 | 4.5 | | | |
| Whole psyllium husk powder ² | | | 3.0 | | |
| Psyllium husk powder ³ | | | | 4.5 | |

| | | | | | |
|---|---|---|---|---|---|
| ¹ Ex Pit&Pit,. the Netherlands (60 wt.% arabinoxylan) ² Ex Myprotein, the Netherlands (65 wt.% arabinoxylan) ³ Ex Jacob Hooy & Co., the Netherlands (75 wt.% arabinoxylan) | | | | | |

The cubes were prepared using the following procedure with equipment of Kenwood Classic® with K-beater:
- the fat was melted and kept at 70°C;
- the remaining ingredients, except for the psyllium husk powder and the water, were introduced into a mixer and mixed for 60 seconds, at "min" setting;
- water was added to ingredient blend and mixing was continued for 60seconds, at speed "1";
- the melted fat blend added and mixing was continued for 120 seconds, at speed "1-2";
- finally, the psyllium husk powder was added, and mixing was continued for 60 seconds at speed "1" and a further 60 seconds at speed "2".

Subsequently, the concentrate mixtures were discharged from the mixer and kept 2 hours at ambient temperature to allow for fat crystallization.

Next, the concentrate mixtures were shaped into cubes of approximately 10 grams by compressing the mixture into a mould. In order to ensure that the cubes contained identical amounts of each of the ingredients except for the psyllium component, the following cube weights were pressed:

| | |
|---|---|
| • Cube 1a: | 10 g |
| • Cube 1b: | 10.15 g |
| • Cube 1c: | 10 g |
| • Cube 1d: | 10.15 g |
| • Control: | 9.7 g |

### Example 2

Hot bouillons were prepared using the bouillon cubes of Example 1. The following procedure was followed to prepare these bouillons:
- China soup bowls were pre-heated in an oven at 50°C
- Pans for cooking bouillon were filled with 2.5 L water. After the water started boiling, 5 identical bouillon cubes were added to the water in the pan.
- Bouillons were simmered for 3 more minutes while stirring with a whisk.
- After preparation, the bouillon was directly transferred from the pan to a large beaker (3L), and from the large beaker to 2 smaller beakers to distribute 150mL of product per pre-heated soup bowl. The bouillon in the beaker was stirred repeatedly to maintain homogeneity.

The hot bouillons were served in 150 ml quantities in preheated china soup bowls to 14 panel members of a QDA panel that had previously been trained to describe the sensory characteristics of bouillons using a set of sensory descriptors. These descriptors included attributes related to appearance, odour, mouthfeel, taste, aftertaste and afterfeel. The individual attributes were scored on a scale of 0 to 15, a high score indicating that the attribute is very noticeable.

The products were offered to the panellists sequentially with intervals of 5 minutes, and were identified by a 3-digit code. Tap water and cream crackers were used by the panellists as a palate cleanser.

A mean score was calculated for each of the sensory attributes that were used to by each panellist describe the bouillons. Within the large set of sensory attributes that the QDA panel used to describe the tested samples, statistically significant differences were observed for the sensory attributes shown in Table 5. The letters between parentheses indicate whether or not differences between scores are statistically significant. In case there is an overlap, e.g. (a) and (ab), the difference in scores is not statistically relevant (at p<0.05). In case there is no overlap, e.g. (a) vs. (b), the difference in scores is statistically relevant (at p<0.05).

The results of the QDA panel evaluation are shown in Table 3.

**Table 3**

| | **1a** | **1b** | **1c** | **1d** | **Control** |
|---|---|---|---|---|---|
| Fat eyes ¹ | 10.4 (ab) | 9.9 (b) | 10.4 (ab) | 9.8 (b) | 11.2 (a) |
| Thickness mouthfeel ² | 2.6 (ef) | 3.2 (cde) | 2.8 (def) | 3.7 (bc) | 2.3 (f) |
| Slithery/jelly mouthfeel ³ | 2.6 (cde) | 3.2 (abcd) | 2.7 (bcde) | 3.6 (a) | 1.9 (ef) |
| Film layer afterfeel ⁴ | 2.7 (abcd) | 2.9 (abc) | 2.8 (abcd) | 3.2 (ab) | 2.5 (bcd) |

| | | | | | |
|---|---|---|---|---|---|
| ¹ the extent to which the surface of the bouillon is covered with fat eyes ² perceived thickness when the bouillon is moved around within the mouth ³ degree of slithery feeling in the mouth ⁴ degree in which the bouillon leaves a film layer in the mouth and on the lips | | | | | |

### Example 3

A bouillon powder base was prepared on the basis of the recipe shown in Table 1 of Example 1.
Different bouillon powders were prepared by admixing psyllium husk powders or whole wheat grain powder (reference) to the aforementioned bouillon powder base in the weight ratios indicated in Table 4.

**Table 4**

| | **Parts by weight** | | | | |
|---|---|---|---|---|---|
| | **2a** | **2b** | **2c** | **2d** | **Ref.** |
| Bouillon base powder | 95 | 95 | 95 | 95 | 95 |
| Psyllium husk powder ¹ | 3.0 | 4.5 | | | |
| Whole psyllium husk powder ² | | | 4.5 | | |
| Psyllium husk powder ³ | | | | 4.5 | |
| Whole wheat grainpowder ⁴ | | | | | 4.5 |

| | | | | | |
|---|---|---|---|---|---|
| ¹ Ex Pit&Pit, the Netherlands (60 wt.% arabinoxylan) ² Ex Gesundform, Germany (77 wt.% arabinoxylan) ³ Ex Jacob Hooy & Co., the Netherlands (75 wt.% arabinoxylan) ⁴ Volkoren tarwemeel borsa 150, the Netherlands (3.8 wt.% arabinoxylan) | | | | | |

### Example 4

Hot bouillons were prepared using the bouillon powders of Example 3. The bouillons were prepared and filled into soup bowls in the same ways as described in Example 2, except that instead of 5 bouillon cubes, 49 grams of bouillon powder 2a and 49.75 grams of the other bouillon powders was added to the boiling water.

The hot bouillons so prepared were evaluated by a QDA panel in the same way as described in Example 2.

The results of the QDA panel evaluation are shown in Table 5.

**Table 5**

| | **2a** | **2b** | **2c** | **2d** | **Ref.** |
|---|---|---|---|---|---|
| Fat eyes ¹ | 10.5 (ab) | 9.8 (b) | 10.4 (ab) | 9.6 (bc) | 11.4 (a) |
| Thickness mouthfeel ² | 2.4 (f) | 3.3 (cde) | 3.3 (bcde) | 3.4 (bcd) | 2.4 (f) |
| Slithery/jelly mouthfeel ³ | 2.4 (de) | 3.3 (abc) | 3.4 (ab) | 3.4 (abc) | 2.1 (ef) |
| Film layer afterfeel ⁴ | 2.7 (abcd) | 2.8 (abcd) | 3.0 (abc) | 3.1 (abc) | 2.6 (bcd) |

| | | | | | |
|---|---|---|---|---|---|
| ¹ the extent to which the surface of the bouillon is covered with fat eyes ² perceived thickness when the bouillon is moved around within the mouth ³ degree of slithery feeling in the mouth ⁴ degree in which the bouillon leaves a film layer in the mouth and on the lips | | | | | |

## Claims

1. A savoury concentrate comprising the following components:
a) 22-85 wt.% inorganic salt;
b) 2-60 wt.% fat;
c) 1-9 wt.% of psyllium seed husk gum;
d) 0-25 wt.% of glutamate component selected from glutamic acid, edible glutamate salts and combinations thereof;
e) 0-25 w.% starch component selected from native starch, pregelatinised starch, maltodextrin, modified starch and combinations thereof;
f) 0-20 wt.% of sugar selected from monosaccharides, disaccharides and combinations thereof;
g) 0-45 wt.% of vegetable matter selected from vegetables, herbs, spices and combinations thereof;
h) 0-10 wt.% water;
wherein the components a) to e) together constitute at least 55 wt.% of the savoury concentrate and wherein the components a) to h) together constitute at least 75 wt.% of the savoury concentrate.

2. Savoury concentrate according to claim 1, wherein the concentrate is a granulate or a shaped article.

3. Savoury concentrate according to claim 2, wherein the concentrate is a shaped article having a weight of 2-50 g, said shaped article comprising the following components:
a) 35-70 wt.% inorganic salt;
b) 5-60 wt.% fat, said fat having a solid fat content at 20°C (N₂₀) of at least 5%;
d) 0-20 wt.% of the glutamate component.

4. Savoury concentrate according to claim 3, wherein the shaped article has a weight in the range of 2.5-30 g.

5. Savoury concentrate according to claim 2, wherein the concentrate is a granulate having a mass weighted average diameter in the range of 0.1-5 mm, said granulate comprising the following components:
a) 35-85 wt.% inorganic salt;
b) 3-20 wt.% fat;
d) 2-20 wt.% of the glutamate component.

6. Savoury concentrate according to claim 5, wherein the granulate has a mass weighted average diameter in the range of 0.2-2.5 mm.

7. Savoury concentrate according to any one of the preceding claims, wherein the inorganic salt is selected from sodium chloride, potassium chloride and combinations thereof.

8. Savoury concentrate according to any one of the preceding claims, wherein the savoury concentrate contains 3-20 wt.% of the starch component.

9. Savoury concentrate according to claim 6, wherein the starch component is native starch.

10. Savoury concentrate according to any one of the preceding claims, wherein the concentrate contains 2-5 wt.% of the psyllium seed husk gum.

11. A method of preparing a savoury product selected from a broth, a bouillon, a soup, a sauce or a gravy, said method comprising the addition of a savoury concentrate according to any one of the preceding claims.

12. A process of preparing a savoury concentrate, said process comprising:
• providing a savoury concentrate mixture containing:
∘ 22-85 wt.% inorganic salt;
∘ 2-60 wt.% fat;
∘ 1-9 wt.% of psyllium seed husk component containing at least 50 wt.% of psyllium seed husk gum;
∘ optional further components; and
• converting the savoury concentrate mixture into shaped articles or granules.

13. Process according to claim 12, wherein the process comprises compressing the savoury concentrate mixture into shaped articles or granules.

14. Process according to claim 12 or 13, wherein the process comprising incorporating the psyllium seed husk gum in the form of a powder having a mass weighted average diameter of 0.05-4 mm.

15. Process according to any one of claims 12-14, wherein the process yields a savoury concentrate according to any one of claims 1-10.

## Patentansprüche

1. Wohlschmeckendes Konzentrat, umfassend die folgenden Bestandteile:
a) 22-85 Gew.-% anorganisches Salz;
b) 2-60 Gew.-% Fett;
c) 1-9 Gew.-% Flohsamenschalen-Gummi;
d) 0-25 Gew.-% Glutamatbestandteil, ausgewählt aus Glutaminsäure, essbaren Glutamatsalzen und Kombinationen davon;
e) 0-25 Gew.-% Stärkebestandteil, ausgewählt aus nativer Stärke, vorgelatinierter Stärke, Maltodextrin, modifizierter Stärke und Kombinationen davon;
f) 0-20 Gew.-% Zucker, ausgewählt aus Monosacchariden, Disacchariden und Kombinationen davon;
g) 0-45 Gew.-% pflanzliches Material, ausgewählt aus Gemüse, Kräutern, Gewürzen und Kombinationen davon;
h) 0-10 Gew.-% Wasser;
wobei die Bestandteile a) bis e) zusammen mindestens 55 Gew.-% des wohlschmeckenden Konzentrats ausmachen und wobei die Bestandteile a) bis h) zusammen mindestens 75 Gew.-% des wohlschmeckenden Konzentrats ausmachen.

2. Wohlschmeckendes Konzentrat nach Anspruch 1, wobei das Konzentrat ein Granulat oder ein Formkörper ist.

3. Wohlschmeckendes Konzentrat nach Anspruch 2, wobei das Konzentrat ein Formkörper ist, der ein Gewicht von 2-50 g aufweist, wobei der Formkörper die folgenden Bestandteile enthält:
a) 35-70 Gew.-% anorganisches Salz;
b) 5-60 Gew.-% Fett, wobei das Fett einen Festfettgehalt bei 20°C (N₂₀) von mindestens 5% aufweist;
d) 0-20 Gew.-% des Glutamatbestandteils.

4. Wohlschmeckendes Konzentrat nach Anspruch 3, wobei der Formkörper ein Gewicht in dem Bereich von 2,5-30 g aufweist.

5. Wohlschmeckendes Konzentrat nach Anspruch 2, wobei das Konzentrat ein Granulat ist, das einen massegewichteten mittleren Durchmesser in dem Bereich von 0,1-5 mm aufweist, wobei das Granulat die folgenden Bestandteile umfasst:
a) 35-85 Gew.-% anorganisches Salz;
b) 3-20 Gew.-% Fett;
d) 2-20 Gew.-% Glutamatbestandteil.

6. Wohlschmeckendes Konzentrat nach Anspruch 5, wobei das Granulat einen massengewichteten mittleren Durchmesser in dem Bereich von 0,2-2,5 mm aufweist.

7. Wohlschmeckendes Konzentrat nach irgendeinem der vorhergehenden Ansprüche, wobei das anorganische Salz aus Natriumchlorid, Kaliumchlorid und Kombinationen davon ausgewählt ist.

8. Wohlschmeckendes Konzentrat nach irgendeinem der vorhergehenden Ansprüche, wobei das wohlschmeckende Konzentrat 3-20 Gew.-% Stärkebestandteil enthält.

9. Wohlschmeckendes Konzentrat nach Anspruch 6, wobei der Stärkebestandteil native Stärke darstellt.

10. Wohlschmeckendes Konzentrat nach irgendeinem der vorhergehenden Ansprüche wobei das Konzentrat 2-5 Gew.-% Flohsamenschalen-Gummi enthält.

11. Verfahren zur Herstellung eines wohlschmeckenden Konzentrats, ausgewählt aus einer Brühe, einer Bouillon, einer Suppe, einer Soße oder einer Bratensoße, wobei das Verfahren die Zugabe eines wohlschmeckenden Konzentrats nach irgendeinem der vorhergehenden Ansprüche umfasst.

12. Verfahren zur Herstellung eines wohlschmeckenden Konzentrats, wobei das Verfahren umfasst:
• Bereitstellen der Mischung eines wohlschmeckenden Konzentrats, enthaltend:
∘ 22-85 Gew.-% anorganisches Salz;
∘ 2-60 Gew.-% Fett;
∘ 1-9 Gew.-% Flohsamenschalen-Bestandteil, enthaltend mindestens 50 Gew.-% Flohsamenschalen-Gummi;
∘ optional weitere Bestandteile; und
• Umwandeln der Mischung des wohlschmeckenden Konzentrats in Formkörper oder Granulate.

13. Verfahren nach Anspruch 12, wobei das Verfahren das Verpressen der Mischung des wohlschmeckenden Konzentrats zu Formkörpern oder Granulaten umfasst.

14. Verfahren nach Anspruch 12 oder 13, wobei das Verfahren die Einverleibung eines Flohsamenschalen-Gummis in Form eines Pulvers mit einem massegewichteten mittleren Durchmesser von 0,05-4 mm umfasst.

15. Verfahren nach irgendeinem der Ansprüche 12-14, wobei das Verfahren ein wohlschmeckendes Konzentrat nach irgendeinem der Ansprüche 1-10 liefert.

## Revendications

1. Concentré savoureux comprenant les constituants suivants :
a) 22-85 % en masse de sel inorganique ;
b) 2-60 % en masse de graisse ;
c) 1-9 % en masse de gomme d'enveloppe de graine de psyllium ;
d) 0-25 % en masse de constituant de glutamate choisi parmi l'acide glutamique, des sels de glutamates comestibles et des combinaisons de ceux-ci ;
e) 0-25 % en masse de constituant d'amidon choisi parmi l'amidon natif, l'amidon pré-gélatinisé, la maltodextrine, l'amidon modifié et des combinaisons de ceux-ci ;
f) 0-20 % en masse de sucre choisi parmi des monosaccharides, disaccharides et combinaisons de ceux-ci ;
g) 0-45 % en masse de matière végétale choisi parmi des légumes, herbes, épices et combinaisons de ceux-ci ;
h) 0-10 % en masse d'eau ;
dans lequel les constituants a) à e) constituent ensemble au moins 55 % en masse du concentré savoureux et dans lequel les constituants a) à h) constituent ensemble au moins 75 % en masse du concentré savoureux.

2. Concentré savoureux selon la revendication 1, dans lequel le concentré est un granulé ou un article façonné.

3. Concentré savoureux selon la revendication 2, dans lequel le concentré est un article façonné ayant une masse de 2-50 g, ledit article façonné comprenant les constituants suivants :
a) 35-70 % en masse de sel inorganique ;
b) 5-60 % en masse de graisse, ladite graisse ayant une teneur en graisse solide à 20°C (N₂₀) d'au moins 5 % ;
d) 0-20 % en masse du constituant de glutamate.

4. Concentré savoureux selon la revendication 3, dans lequel l'article façonné présente une masse dans l'intervalle de 2,5-30 g.

5. Concentré savoureux selon la revendication 2, dans lequel le concentré est un granulé ayant un diamètre moyen pondéré en masse dans l'intervalle de 0,1-5 mm, ledit granulé comprenant les constituants suivants :
a) 35-85 % en masse de sel inorganique ;
b) 3-20 % en masse de graisse ;
d) 2-20 % en masse du constituant de glutamate.

6. Concentré savoureux selon la revendication 5, dans lequel le granulé présente un diamètre moyen pondéré en masse dans l'intervalle de 0,2-2,5 mm.

7. Concentré savoureux selon l'une quelconque des revendications précédentes, dans lequel le sel inorganique est choisi parmi le chlorure de sodium, chlorure de potassium et des combinaisons de ceux-ci.

8. Concentré savoureux selon l'une quelconque des revendications précédentes, dans lequel le concentré savoureux contient 3-20 % en masse du constituant d'amidon.

9. Concentré savoureux selon la revendication 6, dans lequel le constituant d'amidon est l'amidon natif.

10. Concentré savoureux selon l'une quelconque des revendications précédentes, dans lequel le concentré contient 2-5 % en masse de la gomme d'enveloppe de graine de psyllium.

11. Procédé de préparation d'un produit savoureux choisi parmi un brouet, un bouillon, une soupe, une sauce ou un jus de viande, ledit procédé comprenant l'addition d'un concentré savoureux selon l'une quelconque des revendications précédentes.

12. Procédé de préparation d'un concentré savoureux, ledit procédé comprenant :
• la fourniture d'un mélange de concentré savoureux contenant :
∘ 22-85 % en masse de sel inorganique ;
∘ 2-60 % en masse de graisse ;
1-9 % en masse de constituant d'enveloppe de graine de psyllium contenant au moins 50 % en masse de gomme d'enveloppe de graine de psyllium ;
∘ éventuellement d'autres constituants ; et
• la conversion du mélange de concentré savoureux en articles façonnés ou granulés.

13. Procédé selon la revendication 12, dans lequel le procédé comprend la compression du mélange de concentré savoureux en articles façonnés ou granulés.

14. Procédé selon la revendication 12 ou 13, dans lequel le procédé comprend l'incorporation de la gomme d'enveloppe de graine de psyllium dans la forme d'une poudre ayant un diamètre moyen pondéré en masse de 0,05-4 mm.

15. Procédé selon l'une quelconque des revendications 12-14, dans lequel le procédé produit un concentré savoureux selon l'une quelconque des revendications 1-10.
